# EUROPEAN PATENT APPLICATION

(11) **EP 1 610 476 A1**
(43) Date of publication of application: **28.12.2005**
(21) Application number: 04102925.7
(22) Date of filing: 24.06.2004
(51) Int. Cl.: H04B 10/08

(54) **Optical signal time-of-flight measurements**

(71) Applicant: Agilent Technologies Inc, Palo Alto, CA 94306-2024 (US)
(72) Inventor: Beller, Josef, 72070 Tuebingen (DE)
(74) Representative: Barth, Daniel Mathias

(57) **Abstract**

For measuring time-of-flight of optical signals (P1, P2) traveling between a measurement unit (100) and an optical repeater (200), the measurement unit (100) emits a first light beam (P1), the repeater (200) detects a portion of the first light beam (P1), and generates a second light beam (P2) in response to the first light beam (P1), said first light beam and said second light beam (P2) having a determined first time relation, the measurement unit (100) detects a portion of the second light beam (P2) returning from the second position (200), determines a second time relation between the first light beam (P1) and the second light beam (P2) and determines the time-of-flight of the first and the second beam (P1, P2) on the base of the first time relation and the second time relation.

## Description

### BACKGROUND OF THE INVENTION

The present invention relates to measuring optical signals traveling along an optical path, which is often performed for determining a property of an optical device or a property of the optical transmission path connecting a measurement unit with the optical device.

One specific property of a transmission path is the so-called time-of-flight or round trip time on the optical transmission path. Based on the transmission time and the speed of light, e.g. the distance between the measurement unit and the target can be determined.

One method for distance measurements is based on the determination the round trip time of an optical signal to a target and back from the target. Such a distance measuring device or range finder is disclosed in US 6,108,071 describing an highly accurate method for determining the length of the time period that elapses between the time a light emitter emits a pulse of radiation and the time a reflected portion of the emitted pulse of radiation is received back at the device, this method additionally evaluating fractional time periods of clock pulses.

The maximum distance that might be covered by an above-described method is limited by the maximum power of the emitted light pulses, the beam collimation, the transmission attenuation, the reflectivity of the target, and the sensitivity of the receiver.

### SUMMARY OF THE INVENTION

It is an object of the invention to provide an improved measuring setup. The object is solved by the independent claims. Preferred embodiments are shown by the dependent claims.

According to the present invention, a measurement unit, positioned at a first position, emits a first light beam to an optical target positioned at a second location. A portion of the first light beam is detected at the target. In response the first light beam, the target generates a second light beam such, that said first light beam and said second light beam have a determined first time relation. A portion of the second light beam emitted by the target is detected at the measurement unit. The measurement unit determines a second time relation between the first light beam and the second light beam and determines the time-of-flight of the first and the second beam, i.e. the sum of the transmission times of the first and the second beam, on the base of the first time relation, and the second time relation.

Existing techniques with passive target elements suffer from the fact that a measurement signal has to travel both directions back and forth, thus experiencing twice the attenuation of the optical channel between the measurement unit and the target and the reflectivity loss at the target. The present invention allows for an increase of strength of the return signal and thus for increasing the measuring distance and/or the measuring accuracy. The repeater can be realized as a simple optical device without any user interface.

The measurement unit and the target, further referred to as optical repeater, can be connected over a bi-directional optical channel, e.g. an optical fiber, or an appropriate free space optical setup.

In an embodiment of the invention, the light beams are pulse shaped. The first time relation is a time period between the arrival of the portion of the first light beam and the emission of the second light beam at the target, further also referred to as repeater time delay. This time period is a predefined property of the target that might be known by design and/or determined by measurements. The second time relation is a time period between the emission of the first light beam and the detection of the portion of the second light beam covering the traveling time of the first light beam, the traveling time or the returning second light beam, the repeater time delay and a time delay between the arrival of the second light beam and the detection of this light beam. The second time period is preferably determined by starting a timer when emitting the first light beam and by stopping said timer when detecting the portion of the second light beam. Alternatively, the second time period is determined by storing a first timer value when emitting the first light beam, storing a second timer value when detecting the portion of the second light beam, and determining the difference between the first timer value and the second timer value.

In an alternative embodiment, the first light beam and the second light beam are periodically amplitude-modulated signals. The first time relation is derived from the phase delay time between the first light beam and the second light beam at the second position and the second time relation is derived from the phase delay time between the first light beam and the second light beam at the first position.

In a further embodiment of the invention, a plurality of first light beams with different wavelengths are subsequently emitted into the fiber, a plurality of returning portions of corresponding second light beams are subsequently detected and for each of said light beams a corresponding time-of-flight is determined. Further, a diagram is computed by relating the different wavelengths to the corresponding transmission times and a chromatic dispersion coefficient of the transmission medium is calculated from the derivative of said diagram.

In an alternative embodiment of the invention, a distance between the first position and the second position is determined on the base of the light speeds of the first and the second light beam and the time-of-flight. In the case that both light beams have similar wavelengths, and travel on the same optical channel, the light speeds are similar for both beams. Thus, the distance is determined by the ratio of the time-of-flight and the light speed multiplied by two.

The invention can be partly or entirely embodied or supported by one or more suitable software programs, which can be stored on or otherwise provided by any kind of data carrier. In one embodiment of the invention, a software program stored in a data processing unit associated to the measurement unit, executes the steps of receiving from a light source a trigger signal indicating the emission of the first light beam and from a detector a trigger signal indicating the detection of the second light beam, determining the second time relation between the first light beam and the second light beam and determining the time-of-flight of the first and the second on the base of the first time relation stored in a memory of the data processing unit, and the second time relation. The data processing unit can be either integrated into the measurement unit or realized as separate unit to be electrically connected to the measurement unit.

### BRIEF DESCRIPTION OF THE DRAWING

Other objects and many of the attendant advantages of the present invention will be readily appreciated and become better understood by reference to the following detailed description when considering in connection with the accompanied drawing.

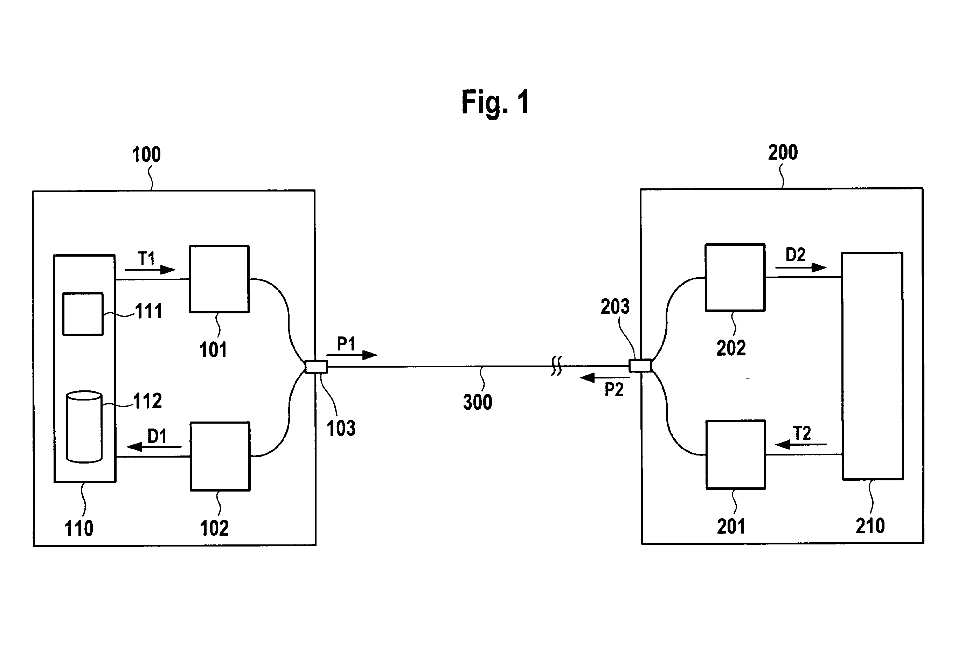

- Fig. 1: shows a schematic measurement setup according to the invention with an optical measurement unit according to the invention connecting to an optical repeater over an optical fiber.

### MORE DETAILED DESCRIPTION OF PREFERRED EMBODIMENTS ACCORDING TO THE INVENTION

Fig. 1 shows a measurement unit 100, a repeater 200 and an optical fiber 300. Measurement unit 100 comprises a first optical transmitter 101, a first optical receiver 102, a first optical coupler 103 and a first control unit 110, this control unit further comprising a data processing unit 111 and a data memory unit 112. Repeater 200 comprises a second optical transmitter 201, a second optical receiver 202, a second optical coupler 203 and a second control unit 210. First transmitter 101 and first detector 102 are optically connected to first optical coupler 103 and second transmitter 201 and second detector 202 are optically connected to second optical coupler 203, wherein first coupler couples a first light pulse P1, symbolized as arrow P1, into a first end of optical fiber 300 and second coupler couples a second light pulse P2, symbolized as arrow P2, into the second end of optical fiber 300.

Instead of optical fiber 300, any other kind of optical transmission path, i.e. a waveguide or free space can be used.

First control unit 110 is electrically connected to first transmitter 101 for transmitting a first trigger signal T1 from first control unit 110 to first transmitter 101 and further electrically connected to first detector 102 for transmitting a first detection signal D1 from first detector 102 to first control unit 110. Second control unit 210 is electrically connected to second transmitter 201 for transmitting a second trigger signal T2 from second control unit 210 to second transmitter 201 and further electrically connected to second detector 202 for transmitting a second detection signal D2 from second detector 202 to second control unit 210.

At the beginning of a measurement, first control unit 110 transmits first trigger signal T1 to first transmitter 101 and simultaneously starts a timer. The trigger signal causes first transmitter 101 to emit first light pulse P1 into optical fiber 300. After a time period, that is dependent on the length of optical fiber 300 and the light speed in optical fiber 300, a portion of light pulse S1 hits second detector 202 of optical repeater 200. The portion, i.e. the amount of attenuation, is depending on the fiber length and the fiber attenuation. As example, for a fiber length of 100 km and a fiber attenuation of 0.3 dB/km a results in an attenuation of 30dB at the second fiber end. Second detector 202 is an opto-electrical converter converting detected power of the incident light into a corresponding electrical current referred to as second detection signal D2. This signal is evaluated by second control unit 210, wherein said unit comprising a logical circuit for a fast and reliable decision, whether an optical pulse with expected and predefined properties, known from the measurement setup, is received. If a decision is positive, second trigger signal is transmitted to second light source 211 that generates second optical pulse S2 to be emitted in opposite direction to first light pulse P1. After a further time period, that is again dependent on the length of optical fiber 300 and the light speed in optical fiber 300, a portion of second light pulse S2 impinges on first detector 102 of measurement unit 100. The amount of attenuation of the returning pulse is substantially similar to the amount of attenuation of the first light pulse described above. Similarly to second detector 202, first detector 102 sends an electrical signal, further referred to first detection signal D1 to first control unit 110. As soon as a returned pulse is detected or recognized, the timer that was started at the measurement start is stopped. The time between the emission of first light pulse P1 and detection of second light pulse P2 is thus stored in the timer memory.

For enabling a long distance measurement, e.g. over a distance of 100 km, first light source 101 and second light source 201 are realized as laser diodes generating short optical high power pulses.

The timer is preferably a counter counting the number of clock pulses or signal transitions that are output from a high frequency clock device.

It should be mentioned that in the description above the time measurement with a counter can also be realized by other methods, e.g. by acquiring a complete sampled trace of the received optical signal in measurement unit 100 and extracting the time delay from that stored data.

Differently to the usage of a mirror as remote target, optical repeater 200 shows a time delay between the time when a light pulse is incident on second detector 202 and the time when a returning light pulse is emitted as response, the time delay being further referred to as first time period. The first time period is a property of optical repeater 200 that is stored in memory 112 of measurement unit 100. First control unit 110 calculates the time-of-flight, consisting of the transition times of both first and second light pulses P1 and P2 by subtracting the stored first time period from the measured second time period.

In an embodiment of the invention, first control unit 210 calculates the distance between the position of measurement unit 100 and the position of optical repeater 200 by multiplying the light speed of the fiber, said value being stored in memory 112, and the calculated time-of-flight.

In order to avoid long delay times between an incidence of a light pulse on the first and/or second detector and the recognition of the light pulse in the corresponding first and/or second control unit, the bandwidth of the electronic circuit should cover a wide frequency range. However, the covering a wide frequency range raises the problem that a wide range of signal noise is captured. This may cause the electronic logic to erroneously recognize pulses that were not present.

Alternatively to the emission of first and second light pulse P1 or P2, first and second transmitters each emit periodically amplitude-modulated signals, preferably with the similar modulation properties. At an optical repeater a response signal is generated with a determined phase relation to the detected signal. At a measurement unit, the accumulated phase delay is measured and the fixed phase delay of the optical repeater is subtracted to obtain only the phase delay corresponding to the time-of-flight delay. On the base of that phase delay and the modulation frequency, the time-of-flight delay is determined.

In a further embodiment, a measurement of chromatic dispersion of an optical fiber is accomplished by analyzing the relative group delay through the fiber as a function of the wavelength of measurement pulses. To measure the group delay, a wavelength variable optical source, e.g. a tunable laser, is used as light source of the measurement unit to generate light pulses at different wavelengths. The wavelength of the tunable laser is then incremented step by step and for each wavelength step the time of flight is determined. Finally, the set of ti me-of-flight measurements is used to calculate the relative group delays and by derivation the chromatic dispersion coefficient.

In the optical repeater, a corresponding tunable laser can be used for generating corresponding return signals. In this case, the time-of-flight for each wavelength is twice the transmission time in each direction of the regarded optical fiber.

However, for the reason of keeping the optical repeater as simple as possible, preferably the optical repeater or transceiver comprises a laser diode generating a strong response pulse at a fixed wavelength in return of receiving a pulse emitted by the tunable laser of the measurement unit 100. In this case, the transmission time at this wavelength in one direction of the fiber has to be determined when sending a measurement pulse at the fixed wavelength (by determining the half part of the transmission time in both directions) and has to be subtracted from each the transmission times measured at the different wavelengths. If the absolute ti ming data is not required, e.g. only the relative group delay is needed for calculating the dispersion property, the time-of-flight from repeater 200 back to measurement unit 100 can be treated as a constant amount, which eventually will be canceled in subsequent calculations.

## Claims

1. A method of determining a time-of-flight of light beams (P1, P2), comprising the steps of:
• emitting at a first position (100) a first light beam (P1),
• detecting at a second position (200) a portion of the first light beam (P1),
• emitting at the second position (200) a second light beam (P2) in response to the first light beam (P1), wherein said first light beam and said second light beam (P2) have a determined first time relation,
• detecting at the first position (100) a portion of the second light beam (P2) returning from the second position (200),
• determining at the first position (100) a second time relation between the first light beam (P1) and the second light beam (P2) and
• determining the time-of-flight of the first and the second beam (P1, P2) on the base of the first time relation and the second time relation.

2. The method of claim 1, wherein the light beams (P1, P2) are pulse shaped and wherein the first time relation is a first time period between a detection of the portion of the first light beam (P1) and an emission of the second light beam (P2) at the second position (200), and the second time relation is a second time period between an emission of the first light beam (P1) and a detection of the portion of the second light beam (P2) at the first position (100).

3. The method of claim 2, wherein the second time period is determined by starting a timer at an emission of the first light beam (P1), stopping said timer at a detection of the portion of the second light beam (P2) and dividing the timer value by the timer clock frequency.

4. The method of claim 2, wherein the second time period is determined by storing a first timer value with the emission of the first light beam (P1), storing a second timer value with the detecting the portion of the second light beam (P2), determining the timer difference between the first timer value and the second timer value, and dividing the timer value by the timer clock frequency.

5. The method of claim 1, wherein the first light beam (P1) and the second light beam (P2) are periodically amplitude modulated signals, wherein the first time relation is a phase delay time between the first light beam (P1) and the second light beam at the second position (200) and the second time relation is a phase delay time between the first light beam (P1) and the second light beam (P2) at the first position (100).

6. The method of claim 1 or any one of the above claims, wherein an optical measurement unit (100) is positioned at the first position, said optical measurement unit (100) emitting the first light beam (P1), detecting the portion of the second light beam (P2), determining the second time period, and an optical repeater (200) is positioned at the second position, said optical repeater (200) detecting the portion of the first light beam (P1), generating in response to the first light beam (P1) the second light beam (P2).

7. The method of claim 6, wherein the repeater (200) comprises an optical detector (202), a laser driver (210) and a laser diode (201) and wherein the detector (202) triggers the laser driver (210) after detection of the portion of the first light pulse (P1), and the laser driver (210) modulates the laser diode (201) and wherein the first time period is the delay time between the arrival time of the portion of the first light beam at the detector and the emission time of the second light beam (P2) at the laser diode (201).

8. The method of claim 7, wherein the detector (202) is an opto-electrical converter and wherein the bandwidth of an electrical circuit of said converter is chosen to be dependent on the signal power of the portion of the first light beam (P1) so that a trade off is reached between a fast detection until arrival of the first light beam and a secure detection of said light beam (P1) over the signal noise.

9. The method of claim 6 or any one of the above claims, wherein the first and the second light beams (P1, P2) are guided over an optical fiber (300), said fiber connecting the optical measurement unit (100) and the optical repeater (200).

10. The method of claim 9, wherein a plurality of coherent first light beams (P1) with different wavelengths are subsequently emitted into the optical fiber (300), a plurality of returning portions of corresponding second light beams (P2) are subsequently detected, for each of said light beams (P1) a corresponding time-of-flight is determined and a chromatic dispersion coefficient of the optical fiber (300) is determined on the base of said times-of-flight.

11. The method of claim 1, wherein a distance between the first position (100) and the second position (200) is determined on the base of the light speeds of the first and the second light beam (S1, S2) and the time-of-flight.

12. A measurement unit (100) adapted for determining a time-of-flight of light beams (P1, P2) traveling between the measurement (100) unit and a target (200), comprising:
• a transmitter (101) adapted for emitting a first light beam (P1),
• a detector (102) adapted for detecting a portion of a second light beam (P2) returning from the target (200) in response to the first light beam (P1).
• a time measuring circuit adapted for measuring a time relation value between the first light beam (P1) and the second light beam (P2),
• a data memory (112) adapted for storing a value of the second time relation as a property of a repeater (200), and
• a processing unit (110) adapted for determining the time-of-flight based on the measured first time relation and the stored second time relation.

13. A measurement setup adapted for determining transmission times of light beams (P1, P2) traveling between the measurement unit (100) and an optical target (200), comprising:
• a measurement unit (100) according to claim 12, and
• a repeater (200) adapted for detecting a portion of the first light beam (P1), and generating and emitting a second light beam (P2) in response to the first light beam (P1), wherein said first light beam and said second light beam (P2) have a determined first time relation that is stored in a data processing unit (110) of to the measurement unit (100).

14. A software program or product, preferably stored on a data carrier, for executing the following steps, when run on a data processing system (110) of a measurement unit (100):
• receiving a trigger signal indicating the emission of the first light beam (P1),
• receiving from a detector a trigger signal (D1) indicating the detection of a portion of a second light beam (P2) returning from an optical repeater,
• determining a second time relation between the first light beam (P1) and the second light beam (P2),
• reading out a first time relation indicating a repeater delay time from a data memory (111), and
• determining a time-of-flight of the first and the second beam (P1, P2) on the base of the first time relation and the second time relation.
